**Europäisches Patentamt**

**European Patent Office**

**Office européen des brevets**

(19)

(11) **EP 1 143 239 A1**

(12) **EUROPÄISCHE PATENTANMELDUNG**

(43) Veröffentlichungstag:
**10.10.2001 Patentblatt 2001/41**

(51) Int Cl.⁷: $G01N\ 27/416$

(21) Anmeldenummer: **00810293.1**

(22) Anmeldetag: **04.04.2000**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(71) Anmelder: **METROHM AG
9100 Herisau (CH)**

(72) Erfinder:
• **Störi, Roland
9100 Herisau (CH)**
• **Kiser, Gerhard
9100 Herisau (CH)**

(74) Vertreter: **Hepp, Dieter et al
Hepp, Wenger & Ryffel AG,
Friedtalweg 5
9500 Wil (CH)**

(54) **Verfahren zur Überwachung der Qualität von elektrochemischen Messsensoren und Messanordnung mit einem elektrochemischen Sensor**

(57)　Die Qualität von elektrochemischen Messsensoren mit wenigstens einer Messelektrode, beispielsweise pH-Sensoren wird dadurch überprüft, dass der Frequenzgang der Sensorimpedanz über einen Frequenzbereich ($F_1$, $F_2$) gemessen wird. Der Frequenzgang oder aus dem Frequenzgang errechnete Wert eines Ersatzschaltbildes des Messsensors (1) werden mit Referenzwerten verglichen. Abweichung von den Referenzwerten bedeutet eine Beeinträchtigung oder Beschädigung der Messelektrode (2). Gleichzeitig kann ausgehend von der Membranimpedanz die Temperatur (T) der Messelektrode (2) und damit der Messflüssigkeit (F) ermittelt werden.

Fig. 1

**Beschreibung**

Die Erfindung betrifft ein Verfahren zur Überwachung der Qualität von elektrochemischen Messsensoren und eine Messanordnung mit einem elektrochemischen Messsensor mit den Merkmalen des Oberbegriffs der unabhängigen Patentansprüche.

Messsensoren werden heute zum Messen von einer Vielzahl von chemischen oder physikalischen Grössen und in einer Vielzahl von verschiedenen Ausführungsformen eingesetzt.

Beispielsweise werden pH-Werte von Messflüssigkeiten potentiometrisch mit Messsensoren ermittelt, die wenigstens eine Messelektrode aufweisen. Dabei kommen häufig Glaselektroden zum Einsatz. Andere Sensorentypen sind beispielsweise Leitfähigkeits-Sensoren oder Platin-Platin Elektroden.

Um auch über längere Zeit zuverlässige Messresultate zu gewährleisten, ist es nötig, die Qualität der Elektrode laufend oder von Zeit zu Zeit zu überwachen. Auf Grund von Verschmutzungen oder mechanischen Beschädigungen an der Messelektrode, beispielsweise einer Glaselektrode für einen pH-Sensor, können sich im Laufe der Zeit sonst Fehler bei Messungen ergeben.

Es ist bereits bekannt, die Qualität von Messelektroden, insbesondere pH-Sensoren zu überwachen, indem z.B. die Impedanz des Sensors ermittelt wird. Die Sensorimpedanz kann Angaben über die Qualität der Messelektrode erlauben.

Aus WO 92/21062 ist beispielsweise ein Verfahren zur Fehlererkennung beschrieben, bei welchem in einem Elektrodensystem auftretende Fehlerquellen im Zuge einer fortlaufenden Überwachung erkannt werden sollen. Zur Prüfung wird ein Rechteck-Impuls auf die Messsonde gegeben. Die durch die Sondenimpedanz veränderte Spannung an der zu prüfenden Messsonde wird dabei gemessen und mit einem Sollwert (z.B. mit der Spannung einer intakten Messsonde) verglichen.

Aus FR 2762395 ist es bekannt, den Zustand von Messelektroden eines potentiometrischen Messsystems durch Messen der Impedanz der Elektroden zu bestimmen. Dazu kommt eine Hilfselektrode sowie zwei Kapazitäten zum Einsatz. Die Ladung der mit den Elektroden verbundenen Kapazitäten, die vom Widerstand der Elektroden abhängt, wird dabei bestimmt.

Aus DE 29 42 238 ist es bekannt, ionenselektive Elektroden durch Anwendung von symmetrischen, bi-polaren Stromimpulsen zu überwachen.

Die bekannten Überwachungsverfahren sind aber alle mit bestimmten Nachteilen behaftet. So ist es bei den bekannten Verfahren nicht möglich, ein bestimmtes Steuergerät, das auf einen Elektrodentyp ausgerichtet ist, zum Betrieb und zur Überwachung von anderen Elektrodentypen einzusetzen.

Ausserdem sind die ermittelten Werte häufig zu wenig genau, um eine zuverlässige Qualitätssicherung zu gewährleisten.

Es ist deshalb eine Aufgabe der vorliegenden Erfindung, die Nachteile des Bekannten zu vermeiden, insbesondere ein Verfahren zur Überwachung von elektrochemischen Messsensoren und eine Messanordnung mit einem elektrochemischen Messsensor zu schaffen, welche sich auf eine Mehrzahl von verschiedenen Sensortypen anwenden lassen, welche zuverlässige Überwachungsresultate liefern und welche auf einfache Weise und ohne grossen zusätzlichen technischen Aufwand realisiert werden können.

Erfindungsgemäss werden diese Aufgaben mit einem Verfahren und mit einer Messanordnung mit den Merkmalen des kennzeichnenden Teils der unabhängigen Patentansprüche gelöst.

Im erfindungsgemässen Verfahren wird zur Überwachung von elektrochemischen Messsensoren, die wenigstens eine Messelektrode aufweisen, der Frequenzgang der Sensorimpedanz über einen bestimmten Frequenzbereich gemessen. Messsensoren sind typischerweise pH-Sensoren, welche mit einer Glaselektrode versehen sind. Beschädigungen an der Glaselektrode sollen dabei ermittelt werden.

Zur Frequenzgangbestimmung wird die frequenzabhängige Impedanz und der frequenzabhängige Phasenwinkel ermittelt.

Der Sensor besteht immer aus einem gesamten, vollständigen, physikalischen System, beispielsweise aus pH-Elektrode, chemischem System und Referenzelektrode, Verbindungskabel im Fall eines pH-Sensors. Die Frequenzgangmessung berücksichtigt alle diese Elemente. Falls die Elektronik in der Elektrode enthalten ist, entfällt der Systemteil Verbindungskabel.

Der Sensor wird überwacht, indem sensorbestimmende Kenngrössen ermittelt werden. Eine der Kenngrössen ist die Impedanz. Wenn der Frequenzgang der Sensorimpedanz gemessen und analysiert wird, kann aus den dadurch bestimmten Werten über ein geeignetes Impedanzmodell und auf Grund von physikalischen Kenntnissen des Sensors auf den Zustand des Sensors geschlossen werden. Im Unterschied zu bekannten Verfahren erlaubt die Messung des Frequenzgangs der Sensorimpedanz eine genauere Ermittlung der Charakertistik des Messsensors. Die Werte des gemessenen Frequenzgangs oder daraus errechnete charakteristische Grössen des Sensors werden anschliessend mit Referenzwerten verglichen. Die Referenzwerte entsprechen typischerweise dem Frequenzgang eines Messsensors unmittelbar nach dessen Produktion.

**EP 1 143 239 A1**

Gemäss einem bevorzugten Ausführungsbeispiel wird der Frequenzgang über einen grossen Frequenzbereich, typischerweise über einen Bereich von 0,1 Hz bis 10 kHz gemessen. Dies erlaubt, Kenndaten verschiedener Sensortypen (z.B. pH-Elektroden und Leitfähigkeits-Messzellen) mit dem gleichen Verfahren bzw. mit der gleichen Messanordnung zu ermitteln und die Sensoren zu überwachen.

Diese Messung wird typischerweise bei den zu erwartenden Betriebstemperaturen des Sensors bestimmt, also beispielsweise zwischen 0°C und 80°C in ca. 1 - 3 Messungen des jeweiligen Frequenzgangs.

Aus dem gemessenen Frequenzgang werden gemäss einem weiteren bevorzugten Ausführungsbeispiel die Werte der Elemente eines den Messsensor beschreibenden Ersatzschaltbildes bestimmt. Die derart bestimmten Werte können dann mit Referenzwerten für die Elemente des Ersatzschaltbildes des Messsensors verglichen werden. Die Bestimmung einzelner Werte von Elementen des Messsensors erlaubt eine genauere Charakterisierung des Zustands des Sensors, insbesondere der Messelektrode.

Vorteilhaft wird gleichzeitig zur Überwachung der Qualität des Messsensors (d.h. zur Ermittlung des Frequenzgangs) die normale Sensorsignal-Auswertung durchgeführt. Dies ist im Fall einer pH-Elektrode eine Messung des Elektrodenpotentials.

Es ist ausserdem möglich, ausgehend von der ermittelten Sensorimpedanz, insbesondere auf der Grundlage des Frequenzgangs, die Temperatur der Messelektrode und damit die Temperatur der zu messenden Flüssigkeit zu ermitteln. Vorteilhaft wird die Temperaturermittlung ebenfalls gleichzeitig zur normalen Sensorsignalauswertung und zur Frequenzganganalyse durchgeführt.

Dies bedeutet, dass gleichzeitig bis zu drei Messsignale ermittelt und ausgewertet werden, und dass bis zu drei Analog/Digital-Wandlungen gleichzeitig durchgeführt werden.

Die Messdaten werden vorteilhaft vom Messsensor über serielle Schnittstellen an ein Steuergerät übermittelt. Das Steuergerät kontrolliert den Messvorgang und zeigt die Messwerte an.

Die Frequenzganganalyse (insbesondere auch die vorteilhafte Ermittlung der Werte der dem Sensor entsprechenden Ersatzschaltung) erfolgt in einer Auswertanordnung, die im Steuergerät enthalten sein kann.

Es ist ausserdem auch denkbar, die Temperaturbestimmung auf Grund der Elektrodenimpedanz nur bei einer bestimmten Frequenz durchzuführen, um den Rechnungs- und Datenübertragungsaufwand zu reduzieren.

Die Temperatur der Messelektrode kann insbesondere im Fall einer pH-Elektrode dadurch bestimmt werden, dass auf Grund des ermittelten Frequenzgangs der Sensorimpedanz der elektrische Widerstand der Sensormembran bestimmt wird, und dass ausgehend vom Widerstand der Sensormembran die Temperatur ermittelt wird.

Damit die normale Sensorsignalauswertung gleichzeitig mit der Frequenzganganalyse durchgeführt werden kann, wird der Frequenzbereich vorzugsweise derart gewählt, dass keine Polarisierung der Messelektrode auftritt, welche die normale Sensorsignalauswertung stören oder verfälschen könnte.

Das erfindungsgemässe Verfahren weist gegenüber dem Stand der Technik weitere zusätzliche Vorteile auf. Dank der Ermittlung der Werte der Elemente des Ersatzschaltbildes können getrennte Qualitätsaussagen über das Indikatorsystem und das Referenzsystem getroffen werden. Es ist ausserdem gleichzeitig möglich (auf Grund der ermittelten Werte der Ersatzschaltung) die Leitfähigkeit der Messflüssigkeit und/oder die Temperatur der Messflüssigkeit zu ermitteln.

Gemäss einem bevorzugten Ausführungsbeispiel ist es ausserdem denkbar, automatisch ein Warnsignal zu erzeugen, sobald die Abweichung zwischen den Werten des Frequenzgangs und den Referenzwerten ausserhalb eines vorbestimmbaren Toleranzbereichs liegt. Dazu können entweder die Frequenzgangkurve mit einer Referenzkurve oder die aus dem Frequenzgang errechneten Werte der Elemente einer Ersatzschaltung mit Referenzwerten für die Elemente der Ersatzschaltung verglichen werden.

Die erfindungsgemässe Messanordnung weist einen elektrochemischen Messsensor mit wenigstens einer Messelektrode auf. Typischerweise ist der Messsensor ein pH-Sensor. Die Messanordnung eignet sich insbesondere zur Durchführung des erfindungsgemässen Verfahrens. Die Messanordnung weist eine Auswertanordnung auf, in welcher Referenzwerte des Frequenzgangs der Sensorimpedanz und/oder daraus errechnete Referenzwerte z.B. der Elemente einer Ersatzschaltung des Messsensors bei verschiedenen Temperaturen gespeichert sind.

Teile der integrierten Schaltung können direkt auf der Messelektrode angeordnet sein. Auf diese Weise erübrig sich die Übertragung des analogen, hochohmigen Signals über Spezialkabel. Gleichzeitig können modulierte digitale Signale zum Steuergerät übertragen werden. Am Steuergeräteingang sind keine speziellen Massnahmen auf Grund der hochohmigen Eingangsimpedanzen notwendig. D.h., dass normale zwei- oder mehrpolige Stecker mit Abschirmung eingesetzt werden können.

Die Auswertanordnung weist ausserdem vorteilhaft ein Steuer- und Anzeigegerät auf, das galvanisch vom Sensor und vorzugsweise auch von der integrierten Schaltung getrennt ist.

Die Messanordnung kann ausserdem mit einem zusätzlichen Temperatursensor versehen sein, der zur Kalibrierung der Temperaturmessung via Sensorimpedanz dienen kann.

Die Erfindung wird im folgenden anhand der Zeichnungen näher erläutert. Es zeigen:

Figur 1          eine schematische Darstellung der erfindungsgemässen Messanordnung,

Figuren 2a und 2b       eine Darstellung des Ampliduden- und Phasengangs der Impedanz bei zwei verschiedenen Sensoren,

Figuren 3a bis 3c       verschiedene Ersatzschaltbilder eines elektrochemischen Messsensors, und

Figuren 4a und 4b       Vergleich des theoretischen und gemessenen Frequenzganges der Sensorimpedanz bei zwei Temperaturen.

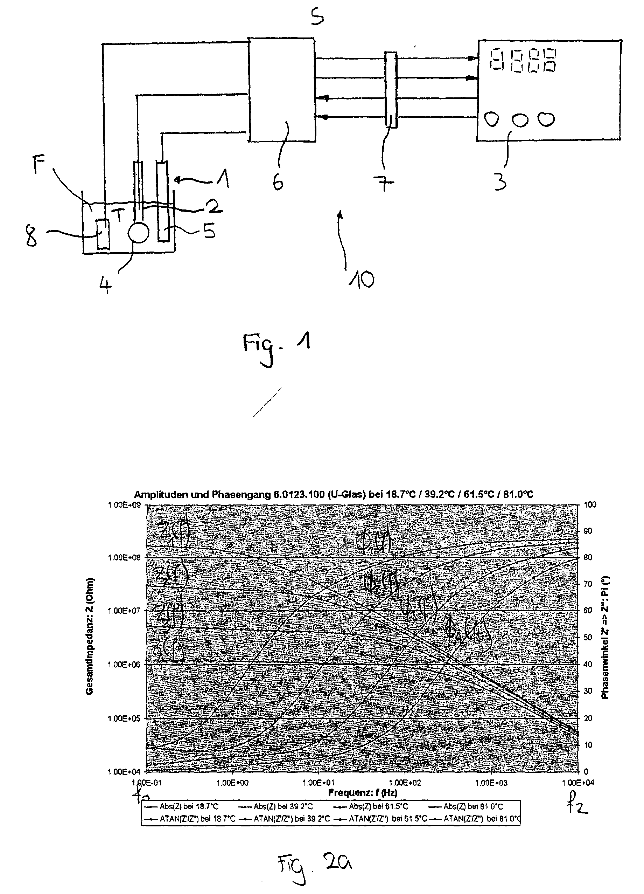

Figur 1 zeigt eine erfindungsgemässe Messanordnung 10. Die Messanordnung 10 besteht im wesentlichen aus einem Messsensor 1 und einer Auswertanordnung, die eine integrierte Schaltung 6 und ein Steuer- und Anzeigegerät 3 aufweist.

Der Messsensor 1 weist eine Messelektrode 2 und eine Referenzelektrode 5 auf. Der Messsensor 1 ist z.B. als pH-Sensor ausgebildet. Die Messelektrode 2 ist als Glaselektrode ausgebildet und weist eine Glasmembran 4 auf.

Der Messsensor 1 kann ausserdem einen Temperatursensor 8 aufweisen, mit dem die Temperatur T der zu messenden Flüssigkeit F ermittelt werden kann.

Die Bestimmung des pH-Werts der Flüssigkeit F erfolgt in an sich bekannter Weise. Das erfindungsgemässe Verfahren lässt sich auch auf andere Sensoren wie z.B. Leitfähigkeitssensoren anwenden.

Die in der integrierten Schaltung 6 ermittelten Signale werden anschliessend über eine serielle Schnittstelle S zum Anzeige- und Steuergerät 3 übermittelt. Die Verbindung der integrierten Schaltung 6 und des Anzeige- und Steuergeräts 3 erfolgt vorzugsweise über eine galvanische Trennung 7, z.B. über eine induktive Kopplung.

Die integrierte Schaltung 6 ist in Figur 1 aus darstellerischen Gründen getrennt vom Messsensor 1 gezeigt. Vorteilhaft ist die integrierte Schaltung 6 aber mit dem Messsensor 1 verbunden, so dass sich eine funktionale Einheit bildet. Der Einsatz der integrierten Schaltung 6 erlaubt die Bestimmung und Auswertung verschiedener Messgrössen auf besonders einfache Weise. Es kommt eine ASIC (ASIC Application Specific Integrated Circuit) zum Einsatz.

Zur Bestimmung bzw. Überwachung der Qualität des Messsensors 1, insbesondere der Messelektrode 2 und deren Glasmembran 4 wird der Frequenzgang des Sensors 1 über einen Frequenzbereich $f_1$, $f_2$ von typischerweise 0,1 Hz bis 10 kHz ermittelt. Dabei wird der Frequenzgang der Impedanz Z(f) und der Phase $\Phi$ (f) ermittelt. Zur Messung des Frequenzganges wird das Generatorsignal kapazitiv oder direkt DC-mässig eingekoppelt.

In Figuren 2a und 2b sind Beispiele des Amplitudengangs $Z_1$, $Z_2$, $Z_3$, $Z_4$(f) und Phasengangs $\Phi_1$(f), $\Phi_2$(f), $\Phi_3$ (f), $\Phi_4$(f) von zwei verschiedenen Messsensoren bei unterschiedlichen Temperaturen dargestellt.

Gemäss Figur 2a wurde der Impedanzgang bei vier verschiedenen Temperaturen, T1 = 18.7°C, T2 = 39.2°C, T3 = 61.5°C und T4 = 81.0°C bei pH-Glas-Elektrode (U-Glas) gemessen.

Bei niedrigen Frequenzen zeigt sich eine starke Temperaturabhängigkeit der Impedanz Z.

In Figur 2b ist der Impedanz- und Phasengang eines alternativen Messsensors (pH-Glas-Elektrode T-Glas) bei Temperaturen von T1 = 30°C, T2 = 45°C und T3 = 66.7°C dargestellt.

Aus den gemessenen Impedanz- und Phasengängen ist ersichtlich, dass die gemessenen pH-Elektroden ein Tiefpassverhalten aufweisen. Die Impedanz im Durchlassbereich zwischen 0 und 10 Hz ist allerdings nicht konstant, sondern nimmt in Abhängigkeit von $\sqrt{(I\omega)}$ ab. Dieser Effekt wird als Warburg-Impedanz bezeichnet und zeigt die Abhängigkeit der Glasimpedanz von verschiedenen Frequenzen.

Um eine möglichst gute Klassifizierung der Qualität des Messsensors 1, insbesondere der Messelektrode 2 zu erhalten, werden aus den ermittelten Werten des Frequenzgangs der Sensoramplitude die Werte $R_{Glas}$, $W_{Glas}$, $R_{Ref}$, $R_{Kabel}$, $C_{Glas}$, $C_{Ref}$, $C_{Kabel}$ von Elementen einer Ersatzschaltung berechnet. Je nach Bedürfnis können unterschiedlich aufwendige Ersatzschaltungen berücksichtigt werden.

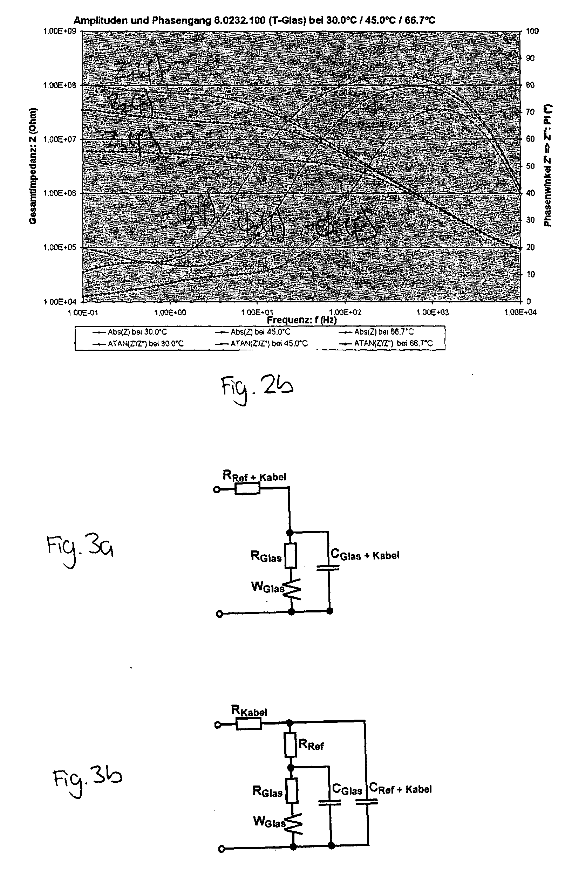

In den Figuren 3a bis 3c sind schematisch verschiedene denkbare Ersatzschaltungen dargestellt.

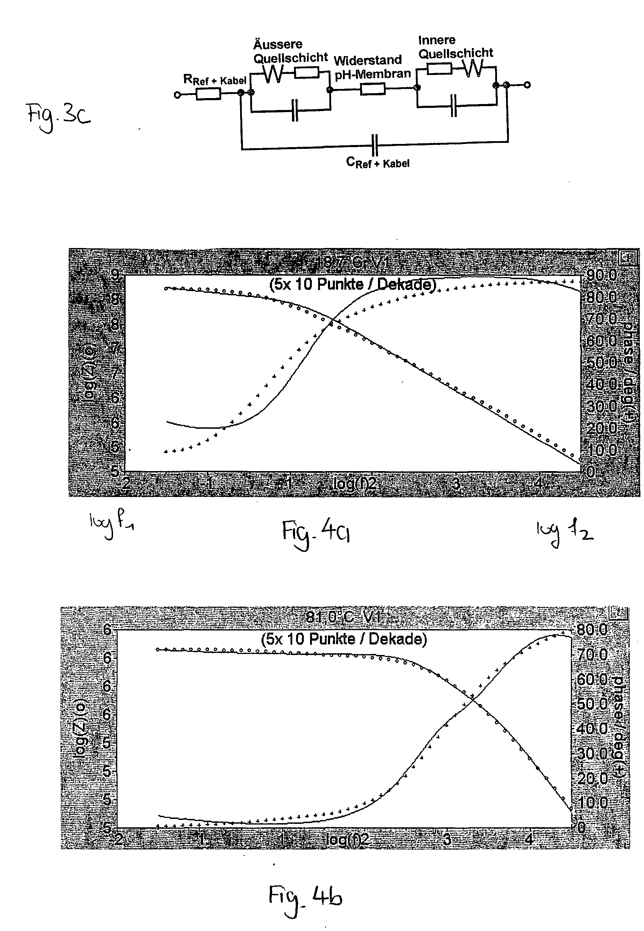

Eine besonders einfache Ersatzschaltung gemäss Figur 3 berücksichtigt den Widerstandsanteil $R_{Glas}$ des Membranglases, die Warburgimpedanz $W_{Glas}$ der Quellschichten als einzelne Werte und die Kapazität des Membranglases $C_{Glas}$ und der Verbindungskabel $C_{Kabel}$ einerseits und den Widerstand der Referenzelektrode $R_{Ref}$ und des Elektrodenkabels $R_{Kabel}$ andererseits je als gemeinsame Elemente. Die innere und die äussere Quellschicht werden dabei zu einem Element zusammengefasst.

Gemäss dem Ersatzschaltbild aus Figur 3b werden der Widerstandsanteil des Elektrodenkabels $R_{Kabel}$ und der Referenzelektrode $R_{Ref}$ sowie der kapazitive Anteil $C_{Glas}$ des Membranglases separat und der kapazitive Anteil $C_{Ref}$ der Referenzelektrode und des Elektrodenkabels $C_{Kabel}$ gemeinsam berücksichtigt.

Gemäss dem Ersatzschaltbild aus Figur 3c werden zusätzlich innere und äussere Quellschichten der Glasmembran einzeln berücksichtigt.

Zur Überwachung der Qualität der Messsensoren wird die Impedanz des Messsensors bei verschiedenen Frequenzen in einem Frequenzbereich $f_1$, $f_2$ gemessen.

In Figuren 4a und 4b sind zwei Messfolgen für ein bestimmtes Sensorsystem gezeigt. Die Messpunkte gemäss Figur 4a wurden bei einer Temperatur von 18.7°C ermittelt, die Messpunkte gemäss Figur 4b bei einer Temperatur von 81°C. Die Messung wurde mit einer pH-Elektrode 6.0232.100 von Metrohm AG durchgeführt (pH-Glas-Elektrode T-Glas).

Ausgehend von den einzelnen Messpunkten wurden rechnerisch für die in den vorangehenden Figuren gezeigten Ersatzschaltungen die Werte der Elemente der Ersatzschaltungen bestimmt. Daraus wurde der theoretische Frequenzgang rechnerisch ermittelt. Der theoretische Frequenzgang ist als durchgezogene Linie dargestellt.

Die Darstellung gemäss Figur 4a basiert auf einer einfachen Ersatzschaltung. Figur 4b auf der ausführlicheren Ersatzschaltung gemäss Figur 3c.

Daraus kann geschlossen werden, dass die Berechnung auf Grund der ausführlichen Ersatzschaltung eine bessere Übereinstimmung mit den effektiv gemessenen Werten ergibt.

Die rechnerisch ermittelten Werte der Ersatzschaltung werden mit Referenzwerten verglichen. Sobald eine Abweichung der gemessenen Werte der Ersatzschaltung von den Referenzwerten festgestellt wird, wird im Anzeige- und Steuergerät 3 ein Signal erzeugt, das dem Benutzer eine Beeinträchtigung oder Beschädigung der Glasmembran anzeigt. Die Referenzwerte sind in einem EEPROM bei der integrierten Schaltung 6 gespeichert. Die Referenzwerte entsprechen den Werten der Elemente der Ersatzschaltung der Elektrode 2 nach deren Produktion. Die Referenzwerte werden durch eine initiale Frequenzganganalyse bei verschiedenen Temperaturen bestimmt.

Zum Messen der Temperatur der Messflüssigkeit kann die Temperaturabhängigkeit des elektrischen Widerstandes $R_{Glas}$ der Membran 4 verwendet werden. Bei einer Temperaturveränderung von ca. 1°C ergibt sich eine Widerstandsveränderung von um die 10%. Für die Bestimmung der Membrantemperatur kann die gleiche Messschaltung und Rechenanordnung wie für die Bestimmung des Amplitudengangs verwendet werden. Die Messung erfolgt nur in einem bestimmten Frequenzbereich (von 1 bis 100 Hz), so dass keine Polarisation der Elektrode erfolgt. Dadurch ist es möglich, die Elektrodenimpedanz gleichzeitig mit dem pH-Wert zu bestimmen.

Eine höhere Messgenauigkeit kann erzielt werden, in dem ein Messpunkt in der Nähe der zu messenden Temperatur kalibriert wird. Auf diese Weise kann eine höhere Genauigkeit erzielt werden. Zur Kalibrierung kann ein Temperatursensor (beispielsweise NTC oder PT1000) eingesetzt werden.

Um die erfindungsgemässe Überwachung der Qualität der Messsensoren 1 durchzuführen, muss nach der Produktion des Messsensors 1 in einem Kalibrierverfahren der Messsensor 1 ausgemessen werden.

In einem ersten Schritt wird in einer Frequenzgangmessung die Sensorimpedanz Z(f) des Messsensors 1 ermittelt. Dazu werden Strom- und Phasenwerte bei verschiedenen Frequenzen gemessen. Die Messung erfolgt bei einer Mehrzahl von verschiedenen, bekannten Temperaturen über den gesamten Temperaturmessbereich der Messsonde 1 (typischerweise von 0 bis 80°C) in einer Flüssigkeit mit guter Leitfähigkeit und unter genau definierten Messbedingungen.

Aus den gemessenen Stromwerten und Phasenwerten wird der Frequenzgang der Impedanz berechnet.

Die gemessenen und gerechneten Werte (Strom, Phase und Impedanz) werden für diejenigen Frequenzen, welche für die Temperaturbestimmung verwendet werden, in einem EEPROM in der integrierten Schaltung 6 gespeichert.

Anschliessend werden für jede gemessene Temperatur die Werte der einzelnen Elemente $R_{Glas}$, $W_{Glas}$, $C_{Glas}$, $R_{Ref}$, $R_{Kabel}$ berechnet und im EEPROM in der integrierten Schaltung 6 ebenfalls gespeichert.

Die Elektrodenqualität wird regelmässig bestimmt. Die Bestimmung der Qualität erfolgt vor Messungen der Temperatur der Messflüssigkeit bzw. der eigentlichen Messgrösse, z.B. dem pH-Wert. Dazu werden die folgenden Messungen, Berechnungen und Vergleiche durchgeführt.

Der Frequenzgang der Sensorimpedanz wird bei einer bestimmten bekannten Temperatur (beispielsweise mit dem Temperatursensor 8 ermittelt) in einer vorgegebenen Flüssigkeit gemessen. Der Frequenzbereich beträgt typischerweise 0.1 Hz bis 10 kHz. Bei der Frequenzgangmessung werden Strom- und Phasenwerte bei den entsprechenden Frequenzen gemessen.

Aus den gemessenen Stromwerten wird die Frequenzabhängige Impedanz des Messsensors 1 ermittelt.

Auf Grund des Frequenzgangs der Sensorimpedanz werden die Werte der einzelnen Elemente einer gewählten Ersatzschaltung der Elektrode 3 berechnet. Die Berechnung erfolgt für die bekannte gemessene Temperatur in der gegebenen Flüssigkeit.

Die berechneten Werte der Elemente der Ersatzschaltung werden mit den bei einer bestimmten Temperatur gemessen und gespeicherten Referenzwerte der Ersatzschaltung der Elektrode nach deren Produktion verglichen. Ein Warnsignal wird erzeugt, falls eine zu grosse oder nicht erklärbare Abweichung zwischen den berechneten Werten und den gespeicherten Referenzwerten festgestellt wird.

Vor der Membranglas-Temperaturbestimmung werden die Elektrodengrunddaten kalibriert. Die im EEPROM gespeicherten Werte (Strom, Phasen, Impedanz und Temperaturwerte) bei denjenigen Frequenzen, welche für die Temperaturbestimmung verwendet werden sollen, werden dazu aus dem EEPROM ausgelesen.

Die Temperatur der Messflüssigkeit wird über die Impedanz des Membranglases wie folgt gemessen:

a) Der Stromwert wird bei einer bestimmten Frequenz, die für die Membranglas-Temperaturbestimmung verwendet werden soll, gemessen.

b) Aus dem gemessenen Stromwert wird die Impedanz bei der bestimmten Frequenz berechnet.

c) Die Temperatur T der Messflüssigkeit F wird ausgehend von der Impedanz ermittelt.

**Patentansprüche**

1. Verfahren zur Überwachung von elektrochemischen Messsensoren (1) mit wenigstens einer Messelektrode (2), insbesondere eines pH-Sensors, **dadurch gekennzeichnet, dass** der Frequenzgang (Z(f), $\Phi$ (f) der Sensorimpedanz (Z) über einen Frequenzbereich ($f_1$, $f_2$) gemessen und mit Referenzwerten verglichen wird.

2. Verfahren nach Anspruch 1, **dadurch gekennzeichnet, dass** der Frequenzgang über einen Frequenzbereich ($f_{1,\,2}$) von 0.1 Hz bis 10 kHz gemessen wird.

3. Verfahren nach einem der Ansprüche 1 oder 2, **dadurch gekennzeichnet, dass** aus dem gemessenen Frequenzgang die Werte ($R_{Glas}$, $C_{Glas}$, $W_{Glas}$, $R_{Kabel}$, $R_{Ref}$, $C_{Ref}$, $C_{Kabel}$) der Elemente einer den Messsensor (1) beschreibenden Ersatzschaltung bestimmt und mit Referenzwerten, insbesondere mit in einer Auswertanordnung (3, 6) gespeicherten Referenzwerten, verglichen werden.

4. Verfahren nach einem der Ansprüche 1 bis 3, **dadurch gekennzeichnet, dass** gleichzeitig zur Ermittlung des Frequenzgangs ein Sensorsignal gemessen und ausgewertet wird.

5. Verfahren nach einem der Ansprüche 1 bis 4, **dadurch gekennzeichnet, dass** ausgehend von der Sensorimpedanz (Z) insbesondere auf Grundlage des Frequenzgangs, die Temperatur (T) der Messelektrode (2) und damit die Temperatur (T) der zu messenden Flüssigkeit (F) ermittelt wird.

6. Verfahren nach Anspruch 5, **dadurch gekennzeichnet, dass** im Fall einer pH-Elektrode der elektrische Widerstand $R_{Glas}$ der Membran (4) der Elektrode (3) bestimmt und die Temperatur ausgehend vom elektrischen Widerstand ($R_{Glas}$) ermittelt wird.

7. Verfahren nach einem der Ansprüche 4 bis 6, **dadurch gekennzeichnet, dass** das Sensorsignal und die den Frequenzgang defininierenden Signale über eine serielle Schnittstelle (S) an einem Steuergerät (3) übermittelt werden.

8. Verfahren nach einem der Ansprüche 1 bis 7, **dadurch gekennzeichnet, dass** ein Warnsignal erzeugt wird, sobald die Abweichung zwischen den Frequenzgangwerten oder den aus dem Frequenzgang berechneten Werten und den Referenzwerten ausserhalb eines vorbestimmbaren Toleranzbereichs liegen.

9. Verfahren nach einem der Ansprüche 1 bis 8, **dadurch gekennzeichnet, dass** der Frequenzbereich ($f_1$, $f_2$) derart gewählt wird, **dass** keine Polarisierung der Messelektrode (2) auftritt.

10. Messanordnung (10) mit einem elektrochemischen Messsensor (1) mit wenigstens einer Messelektrode (2), insbesondere mit einem pH-Sensor, insbesondere zur Durchführung eines Verfahrens nach einem der Ansprüche 1 bis 9, und mit einer Auswertanordnung (3, 6), **dadurch gekennzeichnet, dass** in der Auswertanordnung Referenzwerte des Frequenzgangs der Sensorimpedanz (Z) und/oder daraus errechnete Referenzwerte der Elemente einer Ersatzschaltung des Messsensors (1) gespeichert sind.

11. Messanordnung nach Anspruch 10, **dadurch gekennzeichnet, dass** die Auswertanordnung eine integrierte Schaltung (6) aufweist, die vorzugsweise an der Messelektrode (2) angeordnet ist.

12. Messanordnung nach einem der Ansprüche 10 oder 11, **dadurch gekennzeichnet, dass** die Auswertanordnung ein Steuer- und Anzeigegerät (3) aufweist, welches galvanisch vom Sensor (1) und vorzugsweise von der integrierten Schaltung (6) getrennt ist.

**13.** Messanordnung nach einem der Ansprüche 10 bis 12, **dadurch gekennzeichnet, dass** die Messanordnung mit einem Temperatursensor (8) versehen ist.

S

F

1

2

5

8

T

6

7

3

4

10

**Fig. 1**

Amplituden und Phasengang 6.0123.100 (U-Glas) bei 18.7°C / 39.2°C / 61.5°C / 81.0°C

Gesamtimpedanz: Z (Ohm)

Phasenwinkel Z => Z": PI (°)

Frequenz: f (Hz)

| | |
|---|---|
| Abs(Z) bei 18.7°C | Abs(Z) bei 39.2°C |
| Abs(Z) bei 61.5°C | Abs(Z) bei 81.0°C |
| ATAN(Z'/Z") bei 18.7°C | ATAN(Z'/Z") bei 39.2°C |
| ATAN(Z'/Z") bei 61.5°C | ATAN(Z'/Z") bei 81.0°C |

**Fig. 2a**

Fig. 2b

Fig. 3a

Fig. 3b

Fig. 3c

Äussere Quellschicht · Widerstand pH-Membran · Innere Quellschicht

$R_{Ref + Kabel}$

$C_{Ref + Kabel}$

(5x 10 Punkte / Dekade)

log f₁          Fig. 4a          log f₂

81 0 C V1
(5x 10 Punkte / Dekade)

Fig. 4b

**Europäisches Patentamt** **EUROPÄISCHER RECHERCHENBERICHT** Nummer der Anmeldung

EP 00 81 0293

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | EP 0 497 994 A (KNICK ELEKTRONISCHE MESSGERAET) 12. August 1992 (1992-08-12) * Zusammenfassung; Ansprüche 1,8 * --- | 1,10 | G01N27/416 |
| Y | WO 96 33403 A (HIGSON SEAMUS PATRICK JOHN ;UNIV MANCHESTER METROPOLITAN (GB)) 24. Oktober 1996 (1996-10-24) * Seite 6, Zeile 22 - Seite 7; Abbildungen 2,3 * --- | 1,10 | |
| A | WO 92 21962 A (INGOLD MESSTECHNIK AG) 10. Dezember 1992 (1992-12-10) * Zusammenfassung; Anspruch 1 * --- | 1,4 | |
| A,D | FR 2 762 395 A (ZELLWEGER ANALYTICS) 23. Oktober 1998 (1998-10-23) * das ganze Dokument * --- | 1,5,8, 10,12,13 | |
| A | WO 92 17775 A (KODAK LTD ;EASTMAN KODAK CO (US)) 15. Oktober 1992 (1992-10-15) * Seite 5, Zeile 19 - Seite 6, Zeile 4 * --- | 10,11 | RECHERCHIERTE SACHGEBIETE (Int.Cl.7) |
| A | DE 195 39 763 A (KNICK ELEKTRONISCHE MESGERAETE) 30. April 1997 (1997-04-30) * Spalte 4, Zeile 28-62 * --- | 1,7,8, 10,11,13 | G01N |
| A | EP 0 419 769 A (METTLER TOLEDO AG) 3. April 1991 (1991-04-03) * Anspruch 1 * --- | 1,4 | |
| A | WO 93 08477 A (ROSEMOUNT ANALYTICAL INC) 29. April 1993 (1993-04-29) * Zusammenfassung * --- | 1,4,10 | |
| A,D | DE 29 42 238 A (LEEDS & NORTHRUP CO) 30. April 1980 (1980-04-30) * Anspruch 1 * ----- | 1 | |

Der vorliegende Recherchenbericht wurde für alle Patentansprüche erstellt

| Recherchenort | Abschlußdatum der Recherche | Prüfer |
|---|---|---|
| BERLIN | 11. September 2000 | Brison, O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 81 0293

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-09-2000

| Im Recherchenbericht angeführtes Patentdokument | Datum der Veröffentlichung | Mitglied(er) der Patentfamilie | Datum der Veröffentlichung |
|---|---|---|---|
| EP 0497994 A | 12-08-1992 | DE 59105178 D | 18-05-1995 |
| WO 9633403 A | 24-10-1996 | AU 698852 B | 12-11-1998 |
| | | AU 5340296 A | 07-11-1996 |
| | | EP 0823050 A | 11-02-1998 |
| | | JP 11504708 T | 27-04-1999 |
| | | US 6083366 A | 04-07-2000 |
| WO 9221962 A | 10-12-1992 | EP 0542939 A | 26-05-1993 |
| FR 2762395 A | 23-10-1998 | KEINE | |
| WO 9217775 A | 15-10-1992 | AU 1430692 A | 02-11-1992 |
| | | BR 9205841 A | 11-10-1994 |
| | | CA 2106666 A | 05-10-1992 |
| | | EP 0579632 A | 26-01-1994 |
| | | JP 6506060 T | 07-07-1994 |
| DE 19539763 A | 30-04-1997 | KEINE | |
| EP 0419769 A | 03-04-1991 | CH 678978 A | 29-11-1991 |
| WO 9308477 A | 29-04-1993 | US 5268852 A | 07-12-1993 |
| | | CA 2119435 A | 29-04-1993 |
| | | DE 69223640 D | 29-01-1998 |
| | | DE 69223640 T | 02-07-1998 |
| | | EP 0609334 A | 10-08-1994 |
| | | JP 7500419 T | 12-01-1995 |
| DE 2942238 A | 30-04-1980 | US 4189367 A | 19-02-1980 |
| | | FR 2439400 A | 16-05-1980 |
| | | GB 2034484 A,B | 04-06-1980 |

EPO FORM P0461

Für nähere Einzelheiten zu diesem Anhang : siehe Amtsblatt des Europäischen Patentamts, Nr.12/82